# FASCICULE DE BREVET EUROPEEN

(11) **EP 1 362 407 B1**
(45) Date de publication et mention de la délivrance du brevet: **28.11.2012**
(21) Numéro de dépôt: 02710949.5
(22) Date de dépôt: 07.01.2002
(51) Int. Cl.: H02K 21/04

(54) **MACHINE TOURNANTE PERFECTIONNEE POUR VEHICULE AUTOMOBILE**
VERBESSERTE ROTATIONSMASCHINE FÜR AUTOMOBILE FAHRZEUGE
IMPROVED ROTARY MACHINE FOR MOTOR VEHICLE

(30) Priorité: 05.01.2001 FR 0100122
(43) Date de publication de la demande: 19.11.2003
(73) Titulaire: VALEO EQUIPEMENTS ELECTRIQUES MOTEUR, 94017 Créteil (FR)
(72) Inventeur: AKEMAKOU, Dokou, Antoine, F-94400 Vitry sur Seine (FR)
(74) Mandataire: Gamonal, Didier
(86) Numéro de dépôt international: PCT/FR2002/000037
(87) Numéro de publication internationale: WO 2002/054566

(56) Documents cités:
- EP-A- 0 741 444
- WO-A-96/30992
- DE-C- 4 139 843
- US-A- 6 054 792

## Description

### Domaine de l'invention

La présente invention concerne de manière générale les machines électriques tournantes.

Plus précisément, l'invention concerne des machines tournantes de type alternateur ou alterno-démarreur, mises en oeuvre dans les véhicules automobiles.

Et plus précisément encore, l'invention concerne les machines tournantes dont le rotor comprend des aimants permanents ainsi qu'un ou plusieurs bobinages d'excitation.

De telles machines tournantes sont dites à excitation mixte ; l'excitation du ou des bobinages placés au rotor, commandée par une alimentation électrique adaptée, permet de renforcer ou de réduire la puissance délivrée par la machine (le signe de l'alimentation électrique délivrée aux bobinages d'excitation pouvant être inversé).

Ces machines à excitation mixte permettent ainsi d'augmenter l'efficacité de la machine, et sa souplesse de mise en oeuvre.

### Etat de la technique

Un exemple d'une telle machine est divulgué par le document EP 741 444. Le rotor plus particulièrement exposé à la figure 5 de ce document a une structure à griffes comprenant des parties aimantées, et un bobinage d'excitation annulaire placé autour de l'arbre de rotation de la machine.

Il est également connu de constituer le rotor d'une machine tournante non pas par l'imbrication de griffes dont certaines seraient aimantées, mais par l'empilement parallèlement à l'axe de rotation de la machine de tôle prédécoupée selon le même contour, ledit contour commun des tôles définissant des logements destinés à recevoir des aimants permanents. EP 803 962 divulgue un exemple d'un tel rotor.

Cette dernière configuration présente par rapport à la configuration à griffes l'avantage de produire des lignes de champ magnétique uniformes selon la direction axiale de la machine, ce qui n'est pas réellement le cas avec un rotor à griffes. Et cette disposition améliore l'efficacité de la machine.

Mais le rotor de EP 803 962 n'est pas à excitation mixte, ce qui limite la souplesse de mise en oeuvre de cette machine.

Dans le document WO 96/30992 il est prévu dans des modes de réalisation de réaliser le rotor en plusieurs portions à savoir une portion comprenant des bobinages d'excitation et une portion comportant des aimants permanents de sorte que le rotor est à excitation mixte.

### Objet de l'invention

Un premier but de l'invention est de permettre de réaliser une machine tournante combinant les avantages des deux types de machine évoqués ci-dessus.

Par ailleurs, dans le cas des machines dont le rotor comprend un ou plusieurs bobinages d'excitation, la mise sous tension desdits bobinages peut provoquer leur échauffement, ce qui nuirait à la sécurité et à l'efficacité de la machine.

Un deuxième but de l'invention est d'assurer en outre un fonctionnement sûr et efficace de la machine tournante en évitant tout échauffement excessif d'éléments tels que des bobinages d'excitation.

Afin d'atteindre ces buts, l'invention propose une machine électrique tournante, notamment alternateur ou alterno-démarreur pour véhicules automobiles, comportant un stator entourant un rotor doté d'un paquet de tôles, un entrefer entre le stator et le rotor, des aimants permanents intégrés dans le rotor et des bobinages d'excitation intégrés dans le rotor, dans laquelle les bobinages d'excitation sont enroulés autour de pôles saillants découpés dans le paquet de tôles du rotor et les aimants permanents sont reçus dans des logements réalisés dans le paquet de tôles du rotor, caractérisée en ce que les logements sont fermés axialement à chacune de leurs extrémités par une pièce de maintien dotée d'une partie amagnétique destinée à venir en butée avec les aimants, en ce que la pièce de maintien présente des évidements de réception des chignons des bobinages d'excitation et en ce que la pièce de maintien présente à sa périphérie externe des prolongements axiaux dirigés en sens inverse par rapport au paquet de tôles du rotor et conformés pour retenir les bobines d'excitation à l'encontre de l'action de la force centrifuge.

Des aspects préférés mais non limitatifs de la machine selon l'invention sont les suivantes :
- la partie d'extrémité desdits prolongements est inclinée en direction de l'axe de rotation de la machine,
- lesdits prolongements ont une forme pointue, telle que trapézoïdale,
- lesdits prolongements sont portés par une casquette ferromagnétique d'extrémité qui a la même forme que les tôles, ladite casquette étant intercalée entre le paquet de tôles et un flasque amagnétique, la casquette et le flasque constituant la pièce de maintien (13),
- il est prévu des moyens de refroidissement des bobinages,
- lesdits moyens de refroidissement comprennent des pales de ventilateur,
- les pales sont adaptées pour créer un flux d'air radial, et un flux d'air axial,
- les pales ont des tailles différentes,
- la pièce de maintien porte des pales de ventilation entre les bobinages d'excitation et les pales s'étendent en saillie à partir de la pièce de maintien.
- les pales sont d'un seul tenant avec la pièce de maintien,
- les pales sont rapportées sur la pièce de maintien,
- la surface de la pièce de maintien présente des bossages pour maintenir les pales,
- le flasque présente des trous pour fixation des pales,
- il est prévu sur la surface du flasque des rainures pour recevoir un fil des bobinages d'excitation lors du passage dudit fil d'un bobinage à l'autre, et
- au moins une rainure est croisée,
- les logements des aimants permanents sont ouverts vers la périphérie externe du rotor,
- les logements des aimants permanents sont fermés à la périphérie externe du rotor comme décrit par exemple dans le document US A 6 147 429.
-

### Description sommaire des dessins

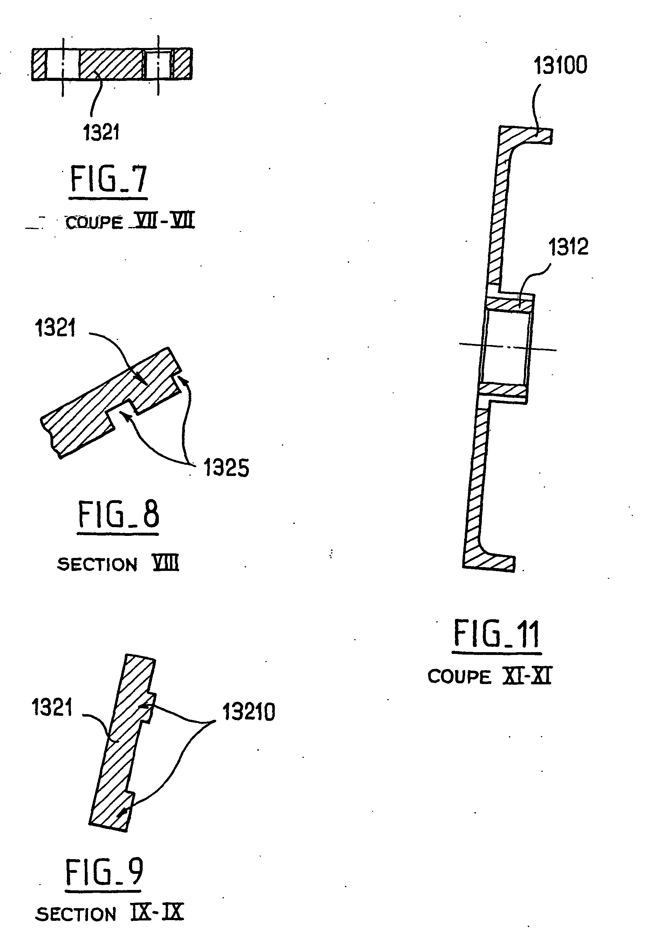

D'autres aspects, buts et avantages de l'invention apparaîtront mieux à la lecture de la description suivante d'une forme de réalisation de l'invention, faite en référence aux dessins annexés sur lesquels :
- les figures 1 à 4 sont des vues d'un même rotor d'une machine selon l'invention,
   ➢ les figures 1 et 2 étant deux vues en élévation correspondant aux deux côtés du rotor, les plans de coupe III-III et IV-IV étant définis sur la figure 1,
   ➢ les figures 3 et 4 étant des vues en coupe selon les plans respectifs III-III et IV-IV,
- les figures 5 à 9 sont des vues d'un élément de flasque de ce même rotor,
   ➢ la figure 5 étant une vue en élévation dudit élément, sur laquelle les plans de coupe VI-VI et VII-VII, ainsi que les plans de section VIII et IX-IX sont définis,
   ➢ les figures 6 et 7 étant des vues en coupe dudit élément selon les plans respectifs VI-VI et VII-VII,
   ➢ les figures 8 et 9 étant des vues en section dudit élément selon les plans respectifs VIII et IX-IX,

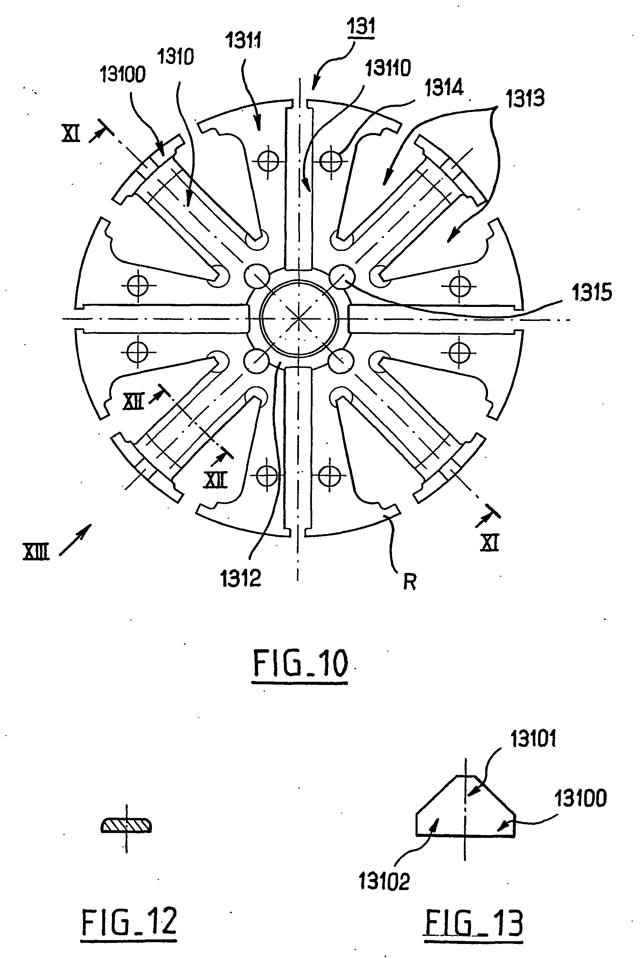

- les figures 10 à 13 sont des vues d'un deuxième élément de flasque de ce même rotor,
   ➢ la figure 10 étant une vue en élévation dudit deuxième élément de flasque de rotor, sur laquelle sont définis les plans de coupe XI-XI et XII-XII, ainsi que la direction XIII et le détail XIV,
   ➢ les figures 11 et 12 sont deux vues du même deuxième élément de flasque de rotor, selon les plans respectifs XI-XI et XII-XII,
   ➢ la figure 13 est une vue d'une partie du même deuxième élément selon la direction XIII,

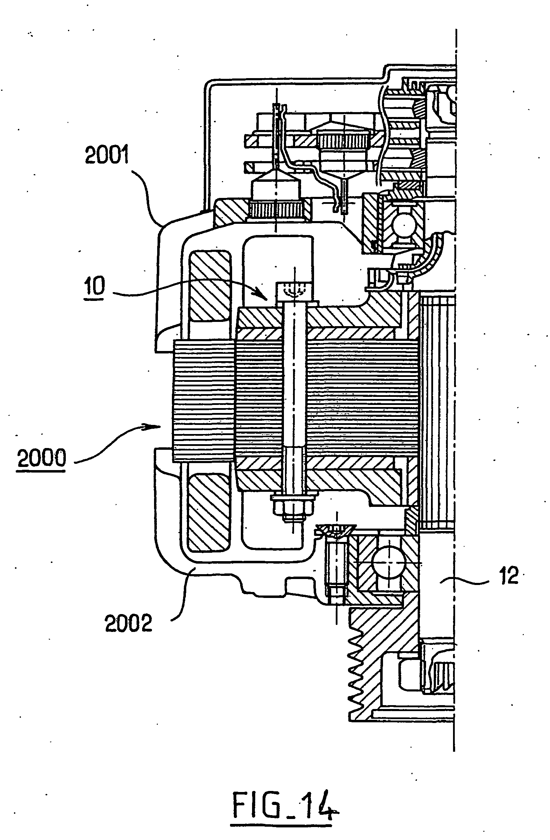

- la figure 14 est une vue en coupe partielle d'une machine selon l'invention

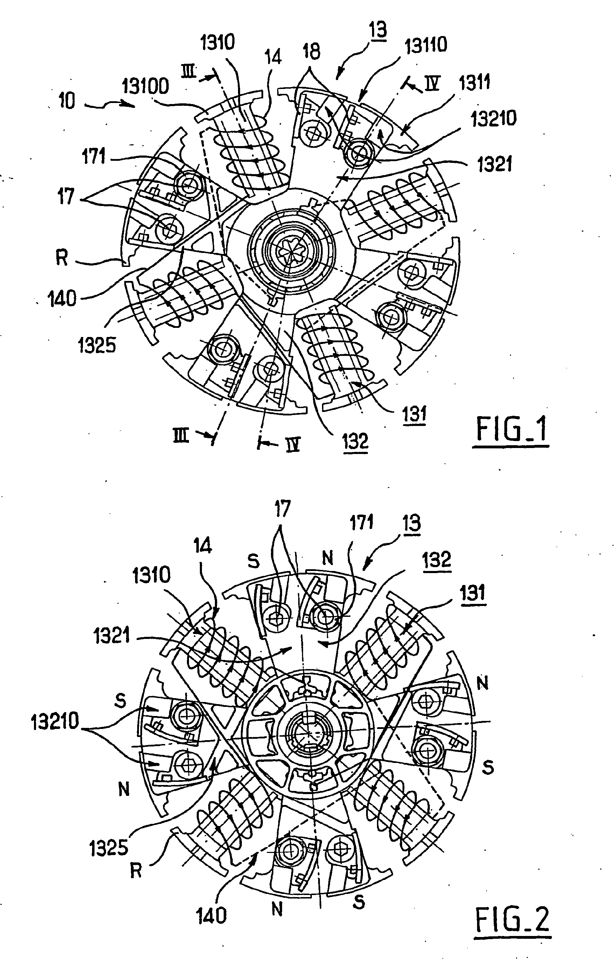

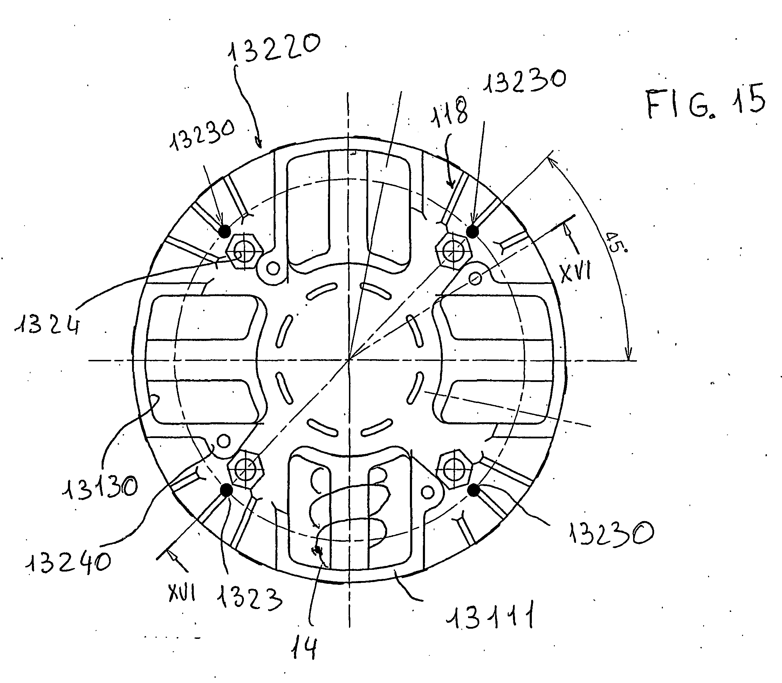

- la figure 15 est une vue en élévation analogue à la figure 1 pour une autre variante de réalisation

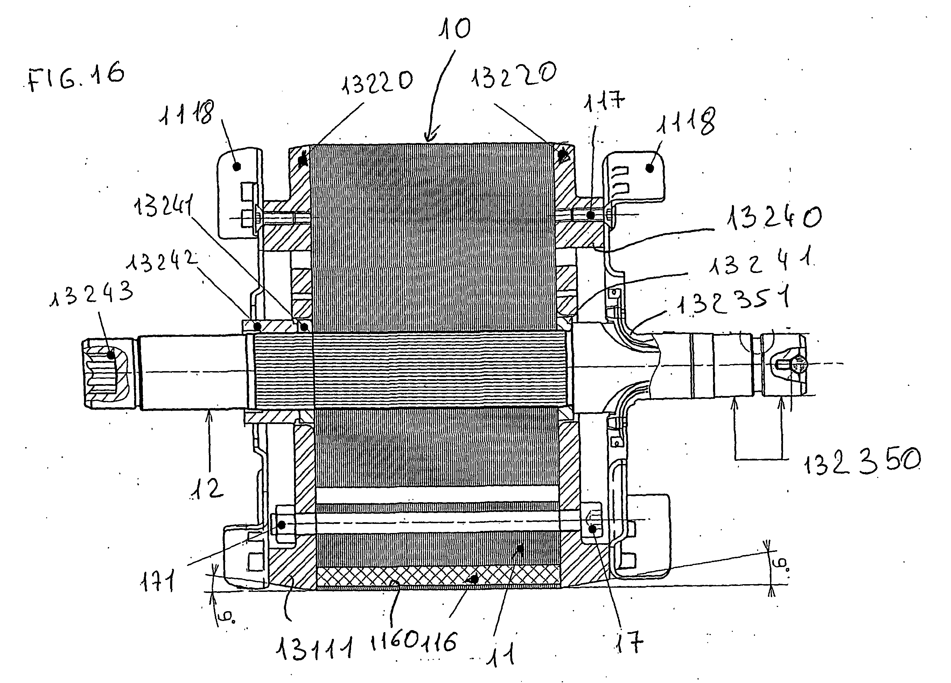

- la figure 16 est une vue en coupe selon la ligne XVI-XVI de la figure 15.

### Description de modes de réalisation préférentiels de l'invention

En référence tout d'abord à la figure 1, on a représenté globalement par la référence 10 le rotor d'une machine tournante telle qu'un alternateur ou un alterno-démarreur. Cette machine est de préférence destinée à être mise en oeuvre dans un véhicule automobile.

Pour mémoire, on rappelle qu'un alterno-démarreur est une machine électrique tournante apte à travailler de manière réversible, d'une part, comme générateur électrique - fonction alternateur et, d'autre part, comme moteur électrique notamment pour démarrer le moteur thermique du véhicule automobile. Un tel alterno-démarreur est décrit par exemple dans le document WO 01/69762 auquel on se reportera pour plus de précisions.

Sur la vue de côté de la figure 1, qui expose une extrémité axiale du rotor, on voit nettement le contour découpé du rotor.

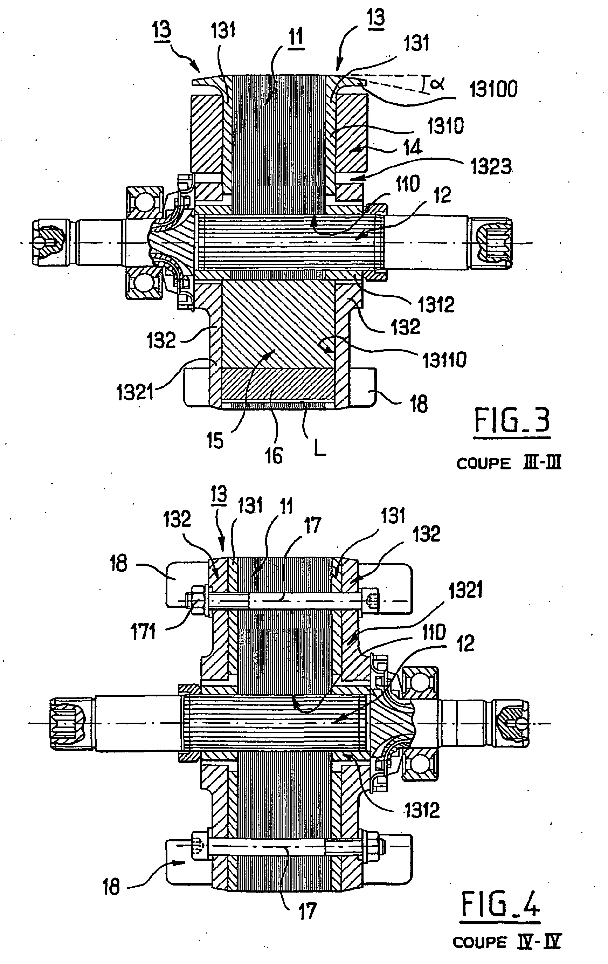

Comme cela apparaît sur les figures 3 et 4, la structure de ce rotor comporte un assemblage de tôles magnétiquement conductrices 11, toutes les tôles 11 ayant le même contour. Ces tôles 11 forment un paquet de tôles découpées et constituent le corps du rotor.

Les tôles de forme généralement circulaire comprennent une ouverture centrale 110 pour être montées sur l'arbre 12 de rotation de la machine.

De part et d'autre du paquet de tôles ainsi constitué, deux pièces de maintien désignées par la référence générale 13 sont également montées sur l'arbre 12. Les pièces 13 sont ici axialement plus épaisses que les tôles 11.

Les pièces 13 et les tôles 11 sont ici liées en rotation à l'arbre 12. Plus précisément l'arbre 12 est moleté pour fixation à rotation des pièces 13 et des tôles 11 sur cet arbre.

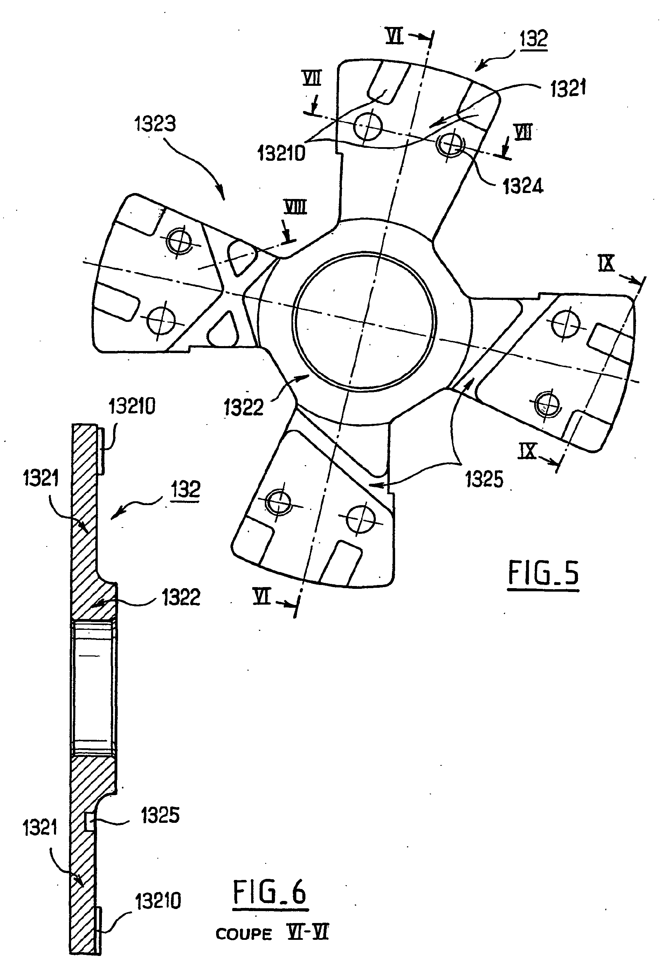

On expliquera plus loin dans ce texte le montage, la forme et la fonction de ces pièces de maintien. Dans le mode de réalisation décrit, chacune de ces pièces de maintien 13 est constituée de deux éléments montés sur l'arbre 12 autour des tôles, à savoir du centre vers l'extérieur du rotor :
- une casquette 131 qui est au contact direct des tôles 11, et qui est plus particulièrement représentée sur la figure 10. Chacune des deux casquettes est réalisée en matériau ferromagnétique (par exemple en acier) dans le mode de réalisation particulier décrit ici,
- et un flasque 132 qui encadre axialement les tôles 11 et les casquettes 131, et qui est plus particulièrement représenté sur la figure 5. Les deux flasques 132 sont réalisés dans un matériau amagnétique tel que l'aluminium et sont ici axialement plus épais que les casquettes 131.

Les tôles, les deux casquettes et les deux flasques sont ainsi montés sur l'arbre 12 moleté de manière à être entraînés en rotation par lui. Ici les casquettes 131 présentent centralement un moyeu 1312 dirigé axialement en direction opposée aux tôles 11 pour fixation en rotation sur le moletage de l'arbre 12. Les moyeux 1312 servent également au calage axial ; une pièce de blocage (non référencée) emmanchée à force sur le moletage de l'arbre 12 servant au blocage axial dans un sens Cette pièce est adaptée à coopérer avec la bague interne d'un roulement à billes (figure 14). Dans l'autre sens le blocage est réalisé à l'aide d'un épaulement de l'arbre 12.

En référence maintenant à la figure 10, on a représenté une vue en élévation selon la direction axiale du rotor d'une casquette 131. Cette casquette a le même contour que chacune des tôles 11 et est axialement plus épaisse qu'une tôle 11.

Ce contour, de forme découpée, est de forme générale circulaire et comporte des pôles 1310 et 1311, répartis en alternance selon une direction orthoradiale, et saillants du centre de la casquette vers sa périphérie. Il en est de même des tôles 11. L'ensemble de la casquette est réalisé d'un seul tenant et forme une pièce à symétrie centrale.

Chaque pôle 1310 est constitué d'un bras s'étendant radialement vers la périphérie externe de la casquette, zone dans laquelle le pôle 1310 se termine par un retour saillant 13100 situé à l'extrémité du pôle 1310, et qui apparaît mieux sur la vue en coupe de la figure 11.

Ce retour est orienté sensiblement à 90° par rapport au bras du pôle 1310, de sorte qu'il se trouvera sensiblement parallèle à l'arbre de rotation lorsque la casquette sera montée sur cet arbre. Lorsque les éléments du rotor sont assemblés, les retours 1310 s'étendent axialement en sens inverse des tôles du rotor.

On notera toutefois qu'il est également possible de concevoir le retour 13100 avec une orientation non pas perpendiculaire au bras du pôle 1310, mais légèrement rentrante vers l'axe de rotation de la machine, formant un angle α qui peut être de l'ordre de 9° avec la direction de l'axe de symétrie de la casquette, comme représenté sur la figure 3.

Cette disposition présente l'avantage de préserver le rotor d'un contact intempestif avec le stator en cas de soubresaut ou de soulèvement de la machine.

La fonction de ce retour 13100 est de retenir dans la direction radiale un bobinage 14 électriquement conducteur, qui est enroulé autour de chaque pôle saillant 1310 (figures 1 à 3), à l'encontre de la force centrifuge subie par le bobinage lors de la rotation de la machine. L'orientation spécifique donnée au retour 13100 sur la figure 3 permet d'améliorer encore l'efficacité de cette retenue.

Revenant aux figures montrant plus spécifiquement la casquette, la figure 13 montre l'extrémité d'un pôle 1310 vue selon la direction XIII parallèle au bras du pôle.

On y constate que le retour 13100 a une forme pointue, en l'occurrence trapézoïdale, avec une pointe 13101 située à l'extrémité du retour, et une base 13102 solidaire du bras du pôle. Ceci permet de diminuer la masse du retour 13100 situé en périphérie du rotor et d'améliorer les performances d'inertie de la machine.

Les pôles 1311 de la casquette sont quant à eux constitués d'un bras s'étendant radialement sur la même longueur que les bras des pôles 1310, mais comportant un évidemment 13110 destiné à recevoir au moins un aimant permanent. A cet effet l'évidement 13110 est de largeur réduite à sa périphérie externe pour formation d'épaulements de retenue de l'aimant permanent.

Les évidements 13110 s'étendent sur sensiblement toute la longueur des pôles 1311 ; ils sont ouverts sur la périphérie externe des pôles 1311 et donc de la casquette 131, de sorte que le flux du ou des aimant(s) contenu(s) dans chaque évidement peut circuler directement dans l'entrefer de la machine séparant le rotor du stator (non représenté), ce qui améliore les qualités de la machine.

De l'autre côté selon la direction radiale, les évidements 13110 sont à leur périphérie interne fermés par le moyeu 1312 de la casquette, de sorte qu'ils sont borgnes et ouverts vers l'extérieur uniquement.

Ces évidements borgnes se retrouvent sur les tôles 11, qui ont le même contour que les casquettes 131.

Dans le mode de réalisation décrit ici, chaque évidement 13110, forme un logement, qui contient non pas un seul aimant, mais deux aimants permanents, superposés radialement pour générer un flux magnétique orthoradial comme décrit dans le document WO 00/57534 auquel on se reportera pour plus de précisions.

On trouve ainsi dans chaque évidemment 13110, comme plus particulièrement représenté sur la figure 3, un aimant permanent en ferrite 15 situé à proximité du moyeu central 1312 de la casquette 131, coiffé d'un aimant en terres rares 16 dont la surface est proche de l'entrefer de la machine.

Le fait de disposer ainsi un aimant en terres rares à la périphérie d'un évidement ouvert sur la ceinture externe du rotor augmente encore la qualité des flux magnétiques et le fonctionnement de la machine.

En décrivant la périphérie de la casquette, on trouve ainsi quatre paires de pôles 1310 et 1311, les pôles 1310 et 1311 étant circonférentiellement alternés, deux pôles consécutifs étant séparés par des évidements 1313. Plus précisément un pôle 1310 est disposé entre deux pôles 1311 consécutifs ; les évidements 1313 étant disposés de part et d'autre du pôle 1310 en étant délimités chacun par le pôle 1310 et le pôle 1311 concerné.

Selon l'invention on peut disposer un nombre quelconque de paires de pôles 1310 saillants destinés à recevoir un bobinage d'excitation 14 à la faveur des évidements 1313 et de pôles 1311 saillants destinés à recevoir à la faveur des évidements 13110 au moins un aimant permanent.

Ainsi qu'il ressort à l'évidence de la description et des dessins chaque pôle 1311 est en réalité décomposé en deux pôles à la faveur de l'évidement 13110 ; chaque aimant permanent étant monté entre deux pôles en sorte que la machine comporte ici 12 pôles.

La casquette 131 comporte également, de part et d'autre d'un évidemment 13110, deux orifices traversants 1314 sur chaque pôle 1311, afin de permettre l'engagement de vis 17, qui traversent les tôles et les deux casquettes qui les entourent, ainsi que les deux flasques 132 qui comprennent également des orifices correspondants, les vis étant serrées par des écrous 171 de manière à solidariser les tôles, les casquettes et les flasques autour de l'arbre 12.

Les orifices 1314 peuvent être disposés différemment de manière à assurer une bonne fixation de l'ensemble ; toutefois, comme on va le voir en détail leur rôle est également de fixer sur l'extérieur des flasques des pales de ventilateur 18 qui, entraînées par la rotation du flasque avec l'ensemble, assurent une circulation d'air permettant de prévenir un échauffement excessif des bobinages 14 dont les chignons d'extrémité débordent axialement les casquettes.

On précise que « extérieur » sans précision quant à la direction signifie généralement tourné à l'opposé du centre du rotor selon la direction axiale (i.e. à l'opposé du paquet de tôles 11), « intérieur » signifiant tourné vers le centre selon la direction axiale (i.e. vers le paquet de tôles).

Ainsi, les orifices 1314 seront de préférence placés près de la périphérie externe de la casquette et des tôles. De plus, un tel placement des pales 18 permet également, comme visible à la figure 14, de refroidir au mieux les éventuels bobinages d'excitation qui seraient intégrés au stator de la machine, la forme et la disposition des pales pouvant être adaptées pour générer une circulation d'air comprenant une composante axiale et une composante radiale.

Pour garantir un bon positionnement des pales 18 sur le flasque, et leur immobilisation - en particulier en rotation - les ailes 1321 des flasques 132 sont munis de bossages 13210 saillants sur leur face externe ; ces bossages permettent de caler la position des pales dans le mode de réalisation décrit ici, dans lequel les pales sont rapportées sur les flasques par vissage.

Les pales peuvent également être fixées sur les flasques par tout autre mode connu (soudage ou autre) ou venues de matière avec le flasque qui les porte (figure 15).

La casquette comprend également dans sa région centrale quatre autres orifices traversants 1315 qui ne collaborent pas à une fonction de fixation, mais permettent d'optimiser la fermeture des lignes de champ dans le rotor en évitant leur diffusion dans la région centrale du rotor.

Et comme on l'a dit, les tôles 11 ont le même contour que la casquette, de sorte qu'on y retrouve non seulement des pôles saillants correspondant aux pôles 1310 et 1311, mais aussi des orifices correspondants aux orifices 1314 et 1315.

On comprend donc que la casquette joue le rôle d'une tôle d'extrémité axiale, qui comporte des moyens de retenue radiale des bobinages 14. La casquette est cependant plus épaisse que les tôles 11.

Et la casquette reste en retrait du flasque selon la direction axiale, vers le centre du rotor, de sorte que les bobinages 14 enroulés autour des pôles saillants de la casquette et des tôles ne dépassent pas axialement la surface du flasque vers l'extérieur, comme représenté sur la figure 3. Les bobinages 14 sont des bobinages d'excitation reliés de manière connue à un régulateur de tension. Ces bobinages 14 selon une caractéristique de l'invention présentent donc des têtes appelées de manière usuelle chignons, qui sont donc reçus dans les évidements 1323 des flasques 132 amagnétiques. Les retours 13100 retiennent donc les chignons des bobinages 14.

Le flasque 132, quant à lui, porte comme on l'a vu les pales de ventilateur 18 et constitue selon une caractéristique de l'invention la partie amagnétique de la pièce de maintien 13.

Il permet donc également de maintenir dans les évidements 13110, selon la direction axiale, les aimants 15 et 16, qui sont engagés axialement dans les cavités formées par ces évidements, et sont par ailleurs maintenus dans la direction radiale par des retours R des extrémités des pôles 1310 et 1311, orientés dans la direction circonférentielle du rotor.

Plus précisément, les évidements 13110 peuvent être coiffés par des laminettes en aluminium L qui aident à maintenir les aimants à l'encontre de la force centrifuge.

Et ces flasques étant réalisés dans une matière amagnétique, ils ne permettent pas aux lignes de champ de se fermer aux extrémités axiales du rotor.

Comme représenté sur la figure 5, le flasque 132 comporte ainsi quatre ailes 1321 réparties régulièrement autour d'un moyeu central 1322, c'est à dire un nombre égal au nombre de cavités 13110 renfermant les aimants. Les ailes sont séparées par des évidements 1323.

Et on retrouve sur ces ailes des orifices de fixation 1324 destinés à se trouver en regard des orifices 1314, et à recevoir les vis 17, qui servent aussi à fixer les pales 18 sur les ailes du flasque.

De la sorte, les ailes 1321 du flasque viennent bloquer axialement les aimants dans leurs cavités 13110, les évidements 1323 entre ces ailes laissant les pôles saillants 1310 et les chignons des bobinages 14 qu'ils portent dégagés axialement, comme représenté sur les figures 1 et 2.

Et on constitue de la sorte un rotor comportant circonférentiellement en alternance des aimants permanents, et des bobinages d'excitation ce qui permet de réduire la taille radiale de la machine.

Ainsi, ces bobinages sont bien exposés au courant d'air généré par les pales de ventilateur 18 et sont correctement refroidis.

Il apparaît donc que le flasque 132 remplit en réalité trois fonctions :
- maintenir les aimants 15 et 16 dans les évidements 13110,
- porter les pales de ventilateur 18,
- et protéger axialement les chignons des bobinages 14, qui ne dépassent pas les ailes du flasque axialement par suite du décalage entre les surfaces de la casquette et du flasque selon cette direction.

Le flasque 132 étant ici plus épais que les casquettes 131 remplit également une fonction supplémentaire à savoir d'équilibrage dynamique de la machine. On retire de la matière, par exemple par perçage, aux endroits souhaités

Dans une variante de réalisation, le refroidissement des bobinages peut être réalisé non par ventilation, mais par une circulation d'eau à l'intérieur du support du stator que comporte de manière connue la machine électrique tournante comme décrit par exemple dans le document DE 100 19 914. Il est également possible de cumuler les deux types de refroidissement par air et par eau.

Par ailleurs, les bobinages 14 forment en réalité un bobinage, qui peut être obtenu par mise en série et/ou en parallèle des quatre bobinages 14 en fonction des applications. Dans les figures 1 et 2, les enroulements des différents pôles saillants 1310 sont reliés en série par un même fil électriquement conducteur 140.

Et pour passer d'un pôle 1310 au suivant, le fil 140 doit contourner les ailes des flasques par l'extérieur (les flasques étant par ailleurs plaqués axialement sur la casquette par le boulonnage des vis 17 pour bloquer les aimants).

Afin que le fil ne dépasse pas axialement hors du rotor par suite de ce contournement, et pour retenir ce fil à l'encontre de la force centrifuge lorsque le rotor tourne, les ailes 1321 du flasque 132 sont munies sur leur face extérieure de rainures 1325 permettant le passage du fil 140 dans l'épaisseur du flasque. En variante les rainures sont réalisées dans la face interne du flasque 132.

Sur les figures, on constate que ces rainures ont une orientation oblique pour être alignées avec le fil 140. Certaines ailes du flasque pourront ainsi comporter une seule rainure oblique, alors que d'autres comportent sur leur face externe deus rainures obliques croisées.

Le fait de prévoir des rainures obliques croisées permet de mettre en oeuvre le même flasque avec différentes orientations du fil 140, et évite de prévoir des flasques différents.

La figure 14 représente en coupe radiale une machine selon l'invention dans laquelle un rotor 10 tel que décrit ci-dessus est monté sur l'arbre 12 ; le rotor étant entouré d'un stator 2000 avec présence d'un entrefer radial entre la périphérie interne du stator et la périphérie externe du rotor.

Dans le mode de réalisation décrit ci-dessus, le flasque et la casquette constituent deux pièces distinctes.

Il est également possible selon l'invention de les rassembler en une seule pièce de maintien 13, comme décrit par exemple ci-après dans les figures 15 et 16. En variante la fixation des tôles 11 et des pièces 13 est réalisée par rivetage.

Dans le cas où le flasque et la casquette forment ainsi une pièce de maintien unique 13, cette pièce devra être réalisée dans une matière amagnétique pour éviter la fermeture des lignes de champ magnétique aux extrémités axiales du rotor.

Et dans ce cas, les retours 13100 seront prévus directement sur la pièce de maintien unique 13 qui rassemble le flasque et la casquette.

Il apparaît que la machine selon l'invention permet d'obtenir une efficacité et une souplesse importante, grâce en particulier à la répartition uniforme des lignes de champ selon la direction axiale (rotor à tôles empilées et non à griffes, excitation mixte au rotor), et fournit un refroidissement important et efficace de la machine grâce aux pales de ventilateur.

On précise que ces pales peuvent être de tailles et de formats différents et adaptés à la machine et aux bobinages, et que leur nombre par aile de flasque peut varier.

On pourrait également imaginer d'autres moyens de refroidissement des bobinages, tels que deux ventilateurs montés sur l'arbre de la machine de part et d'autre du rotor, et entraînés en rotation par l'arbre (à une vitesse égale à la vitesse de rotation du rotor, ou différente pour augmenter le vent relatif entre les pales du ventilateur et les bobinages du rotor.

Dans ce cas, on ménagera de préférence un espace dans la direction axiale entre chacun des deux ventilateurs et le rotor, de manière à ne pas endommager les chignons des bobinages.

Il est également possible de rendre les pales solidaires des pôles de la casquette, dans le cas où les pièces de maintien 13 comportent comme dans la description ci-dessus une casquette et un flasque.

La machine décrite peut comporter un pont de diodes ou un pont de transistors ou un pont mixte (diodes-transistors) intégré à la machine ou séparé d'elle.

Enfin, les bobinages d'excitation peuvent être réalisés avec un fil 140 de section ronde ou bien carrée.

Et le stator de la machine peut comprendre des bobinages d'excitation, par exemple deux bobinages triphasés décalés de 30° pour réduire les ondulations de tension et de bruit magnétique.

Ce stator référencé en 2000 à la figure 14 comporte un corps comportant un paquet de tôles présentant intérieurement des encoches pour montage des bobinages d'induit pouvant comporter des éléments électriquement conducteurs en forme de fils ronds ou d'épingles. De telles épingles sont d écrites par exemple dans les documents WO 92-106527 ou PCT/FR 01/04147. Les épingles, peuvent par exemple avoir une forme générale de U, ayant dans un mode de réalisation une section rectangulaire.

Chaque phase du stator comporte dans un mode de réalisation deux enroulements décalés de manière précitée de 30° en sorte que le nombre d'encoches du stator est augmenté par rapport à celui du document WO-92 106527. En variante les enroulements sont montés en parallèle en sorte que le stator porte deux séries de bobinages triphasés décalés de 30° électrique comme mentionné dans le document PCT/FR 01/04147 précité. De manière générale les bobinages polyphasés du stator à épingles peuvent comporter une encoche par pôle et par phase ou deux encoches par pôle et par phase avec un nombre de spires, par exemple de 1 à 16, dépendant des applications. Un faible nombre de spires peut nécessiter d'avoir plusieurs épingles en parallèle.

Les sorties des phases sont reliées à un pont d'éléments redresseurs par exemple à diodes (non référencé à la figure 14) porté par un palier arrière 2001, ledit palier arrière portant par ailleurs centralement un roulement pour supporter l'extrémité arrière de l'arbre 12, muni de bagues collectrices avec lesquelles coopèrent des balais solidaires d'un porte-balais visible partiellement à la figure 14. Le pont est monté de manière connue entre la masse et une ligne d'alimentation électrique reliée à la borne positive de la batterie et appartenant à un dispositif d'alimentation électrique pour le réseau de bord du véhicule automobile. Ainsi qu'on le sait les phases du stator appartiennent à l'induit de l'alternateur en sorte qu'il est généré un courant alternatif qu'il faut redresser pour recharger la batterie du véhicule et alimenter les consommateurs du véhicule. En variante les éléments redresseurs comporte des transistors du type MOS notamment lorsque la machine électrique tournante est un alterno-démarreur comme décrit par exemple dans le document FR A 2 745 445 le pont étant alors un pont redresseur et un pont de commande. En variante, comme décrit dans le document WO 01/76052, il est prévu deux sources d'alimentation. Chaque source comporte au moins un bobinage d'induit porté par le stator, un pont d'éléments redresseurs et un pont auxiliaire d'éléments redresseurs respectivement du type positif et négatif. Des moyens sont prévus pour relier les deux ponts auxiliaires. Ces moyens sont aptes à être commandés pour dans un premier état relier en série les deux ponts auxiliaires et dans un deuxième état bloquer la liaison entre les deux ponts auxiliaires en sorte que les deux sources alimentent en parallèle la ligne d'alimentation électrique du réseau de bord du véhicule automobile.

Le palier arrière 2001 est relié à un palier avant 2002, par exemple par des tirants non visibles sur la figure, pour formation d'un support fixe pour le stator 2000, sachant que le palier avant comporte également centralement un roulement à billes portant à rotation l'extrémité avant de l'arbre 12 sur laquelle est fixée la poulie d'entraînement (non référencée) reliée au moteur à combustion interne du véhicule automobile par une transmission comportant une courroie.

La machine tournante selon l'invention peut ainsi avoir la structure de stator et de paliers d'un alternateur classique, tel celui décrit dans le document EP-0515259 auquel on se reportera pour plus de précisions ; les paliers 2001, 2002 étant ajourés pour circulation de l'air à l'intérieur de la machine.

La machine selon l'invention est donc d'un faible encombrement et d'une forte puissance électrique tout en étant peu bruyante.

Cette machine peut tourner à des grandes vitesses de rotation.

Bien entendu en variante les paliers 2001, 2002, c'est à dire le support du stator, peuvent comporter des canaux pour circulation d'un fluide de refroidissement de la machine.

Cette machine est bien adaptée pour fonctionner sous différentes tensions avec un réseau de bord de 42V, 150V 216V pour les applications de véhicules du type hybride.

En variante la machine peut travailler à une tension supérieure et entraîner le véhicule automobile comme décrit dans le document DE C 41 39 843 auquel on se reportera pour plus de précisions.

Bien entendu les aimants permanents, dans une autre configuration de machine hybride, peuvent être agencés radialement pour générer un flux magnétique radial comme décrit dans le document US-A-6 147 429 auquel on se reportera pour plus de précisions. Dans ce cas les logements, d'orientation circonférentielle, des aimants permanents sont fermés à la périphérie externe du rotor. Il en est ainsi dans les figures 15 à 16 dans lesquelles les aimants permanents 116 sont enterrés dans des logements 1160 réalisés dans les tôles 11.

Dans ces figures 15 et 16 avantageusement entre deux pôles à aimants permanents, par exemple du type Nord, consécutifs on a la disposition suivante à la périphérie externe du rotor :
un pôle à aimant permanent Nord, un pôle sans rien, un pôle bobiné comme le pôle 1311, un pôle sans rien et un pôle à aimant permanent Nord.

Lorsque le bobinage 14 n'est pas excité le flux magnétique généré par les aimants passe par le stator à encoches en sorte que le rotor présente à sa périphérie externe, entre deux pôles Nord consécutifs, trois pôles Sud. Lorsque le bobinage 14 est excité le pôle Sud central devient alors un pôle Nord.

Comme décrit dans le document US-A- 6 147 429 on retrouve dans les figures 15 et 16 le motif NSSS quatre fois répétitif ce qui correspond à 16 pôles. En variante il est prévu trois bobinages 14 et la machine comporte 12 pôles. Toutes les configurations du document US précité sont envisageables.

Dans les figures 15 et 16 la machine comporte quatre bobinages 14 reliés selon les applications tous en série, tous en parallèle ou en série parallèle.

Dans ces figures la pièce de maintien présente seulement un élément à savoir un flasque 13220 amagnétique multifonctions. Ce flasque est à base d'aluminium et présente à sa périphérie externe des prolongements axiaux 13111 dirigés en sens inverse par rapport au paquet de tôles 11 du rotor et conformés pour retenir les bobinages d'excitation à l'encontre de l'action de la force centrifuge.

La partie d'extrémité desdits prolongements est inclinée en direction de l'axe de rotation de la machine, ici selon un angle de 9°.

Les prolongements 13111, de forme pointue telle que trapézoïdale, constituent le bord supérieur de fenêtres délimitant des évidements de réception 13130 des chignons des bobinages d'excitation 14.

Ces fenêtres comportent des bossages 13240 dotés de trous taraudés (non référencés).

Il est donc prévu quatre fenêtres et quatre bossages 13240. Ces bossages servent à la fixation de ventilateurs 1118. Ces ventilateurs sont du type classique et comportent donc un flasque portant à sa périphérie externe des pales à flux axial et/ou radial.

Les flasques sont fixés sur les bossages 13240 à l'aide de vis 1117 vissées dans les trous taraudés des bossages. En variante la fixation est réalisée par rivetage.

Il est prévu des pièces 13241 et 13242 pour immobiliser axialement le paquet de tôles 11 présentant à leur périphérie externe des logements fermés 1160 circonférentiellement pour le logement des aimants permanents 116. Ces pièces 13241 et 13242 sont engagées sur le moletage central de l'arbre 12 présentant à l'une de ses extrémités 13243 une cavité borgne dotée de dentures internes multiples pour fixation de la poulie que comporte l'alternateur de manière connue en soi.

Chaque flasque 13220 présente également des zones 13230 pour équilibrage dynamique de la machine.

Il est prévu entre deux fenêtres des pales 118 venues d'un seul tenant par moulage avec le flasque.

Ainsi la machine comporte deux séries de pales à savoir les pales 118 et les pales issues des ventilateurs 1118. Ces pales sont montées de manière alternées circonférentiellement et sont décalées axialement en sorte que les ventilateurs 118 n'interfèrent pas avec les bobinages 14. Le flasque 13220 protège donc axialement les bobinages 14 comme dans les figures précédentes.

Centralement les flasques présentent des ouvertures de forme oblongue alignées avec des ouvertures oblongues associées des tôles 11 pour faciliter le refroidissement.

Les aimants permanents 116 sont donc bloqués axialement par les flasques 13220 présentant des passages 1324, ainsi que les tôles, pour les vis de fixation 17, ici en forme de tirant comme à la figure 4 ; les écrous 171 prenant appui sur le flasque 13220 concerné.

En variante le paquet de tôle est fixé par boutonnage et l'ensemble ventilateur 118-flasque 13220 est fixé par rivetage sur les tôles 11.

En variante le flasque 13220 et le ventilateur 118 sont en une seule pièce obtenue par exemple par moulage.

Les aimants permanents 116 sont retenus axialement par les flasques au niveau des zones présentant les pales 118.

A la figure 16, on voit en 132350 deux bagues collectrices sur lesquelles sont admises à frotter, de manière connue en soi, des balais portés par un porte-balais et reliés au régulateur de tension que comporte la machine.

Ces bagues sont reliées par des liaisons filaires 132351 aux extrémités des bobinages d'excitation 14 dont l'un est représenté schématiquement à la figure 15 ; les rainures de passage des fils de liaison entre les bobinages 14 étant réalisées sur la face interne des flasques c'est-à-dire la face tournée vers le paquet de tôles 11.

Toutes les combinaisons sont possibles. Ainsi à la figure 16 les rainures de passages des fils de liaison sont réalisées dans la face externe du flasque 13220.

Les logements 1160 sont par exemple de forme oblongue ou de forme rectangulaire pour montage d'aimants permanents de forme rectangulaire plus économiques. En variante les aimants permanents de forme rectangulaire sont montés dans des logements de section trapézoïdale facilitant la fixation des aimants par collage à l'aide d'un verni d'imprégnation placé dans les deux triangles d'extrémités des logements 1160 non occupés par les aimants. Il faut alors prévoir des trous d'accès à ces triangles dans les flasques 13220

## Revendications

1. Machine électrique tournante, notamment alternateur ou alterno-démarreur pour véhicules automobiles, comportant un stator entourant un rotor (10) doté d'un paquet de tôles (11), un entrefer entre le stator et le rotor, des aimants permanents (15,16) intégrés dans le rotor et des bobinages d'excitation (14) intégrés dans le rotor, dans laquelle les bobinages d'excitation sont enroulés autour de pôles saillants (1310) découpés dans le paquet de tôles du rotor et les aimants permanents sont reçus dans des logements (13110, 1160) réalisés dans le paquet de tôles du rotor, **caractérisée en ce que** les logements (13110) sont fermés axialement à chacune de leurs extrémités par une pièce de maintien (13) dotée d'une partie amagnétique (132, 13220) destinée à venir en butée avec les aimants , **en ce que** la pièce de maintien présente des évidements (1323) de réception des chignons des bobinages d'excitation et **en ce que** la pièce de maintien (13) présente à sa périphérie externe des prolongements axiaux (13100, 13111) dirigés en sens inverse par rapport au paquet de tôles (11) du rotor et conformés pour retenir les bobines d'excitation (14) à l'encontre de l'action de la force centrifuge.

2. Machine selon la revendication 1, **caractérisée en ce que** la partie d'extrémité desdits prolongements est inclinée en direction de l'axe de rotation de la machine.

3. Machine selon la revendication 2, **caractérisée en ce que** lesdits prolongements (13100, 13111) ont une forme pointue, telle que trapézoïdale.

4. Machine selon l'une quelconque des revendications précédentes, **caractérisée en ce que** la pièce de maintien (13) comporte un flasque (132) constituant la partie amagnétique de la pièce de maintien, **en ce que** lesdits prolongements (13100) sont portés par une casquette (131) ferromagnétique d'extrémité qui a la même forme que les tôles, ladite casquette étant intercalée entre le paquet de tôles et le flasque (132), la casquette et le flasque constituant la pièce de maintien (13).

5. Machine selon la revendication 4, **caractérisée en ce que** le flasque (132) est plus épais que la casquette (131).

6. Machine selon l'une quelconque des revendications 1 à 3, **caractérisé en ce que** la pièce de maintien (13) est une pièce unique qui comporte un flasque (13220) constituant la partie amagnétique de la pièce de maintien, et **en ce que** lesdits prolongements (13111) appartiennent à la périphérie externe du flasque (13220).

7. Machine selon l'une quelconque des revendications précédentes, **caractérisée en ce que** la pièce de maintien (13) porte des pales (18, 118, 1118) de ventilation et **en ce que** les pales s'étendent en saillie à partir de la pièce de maintien.

8. Machine selon la revendication précédente, **caractérisée en ce que** les pales (118) sont d'un seul tenant avec la pièce de maintien.

9. Machine selon l'une quelconque des revendications 4 à 6, **caractérisée en ce que** les pales sont rapportées sur la pièce de maintien.

10. Machine selon la revendication précédente, **caractérisée en ce que** la surface de la pièce de maintien présente des bossages pour maintenir les pales.

11. Machine selon l'une quelconque des revendications précédentes, **caractérisée en ce que** la pièce de maintien (13) comporte un flasque (132, 13220) constituant la partie amagnétique de la pièce de maintien et **en ce qu'**il est prévu sur la surface du flasque des rainures (1325) pour recevoir un fil (140) des bobinages d'excitation lors du passage dudit fil d'un bobinage à l'autre.

12. Machine selon l'une quelconque des revendications précédentes, **caractérisée en ce que** le paquet de tôles et la pièce de maintien (13) comporte des passages (1314, 1324) pour des tirants (17) de fixation.

## Claims

1. Rotary electric machine, notably alternator or alternator-starter for motor vehicles, comprising a stator surrounding a rotor (10) provided with a stack of laminations (11), an air gap between the stator and the rotor, permanent magnets (15, 16) built into the rotor and excitation windings (14) built into the rotor, in which machine the excitation windings are wound around salient poles (1310) cut in the stack of laminations of the rotor and the permanent magnets are housed in housings (13110, 1160) produced in the stack of laminations of the rotor, **characterized in that** the housings (13110) are closed axially at each of their ends by a retaining piece (13) provided with a non-magnetic part (132, 13220) intended to come into abutment with the magnets, **in that** the retaining piece has recesses (1323) to accommodate bundles of the excitation windings and **in that** the retaining piece (13) has at its external periphery axial extensions (13100, 13111) directed in the opposite direction in relation to the stack of laminations (11) of the rotor and configured to retain the excitation windings (14) against the action of centrifugal force.

2. Machine according to Claim 1, **characterized in that** the end part of the said extensions is inclined towards the axis of rotation of the machine.

3. Machine according to Claim 2, **characterized in that** the said extensions (13100, 13111) have a pointed, for instance trapezoidal shape.

4. Machine according to any one of the preceding claims, **characterized in that** the retaining piece (13) comprises a flange (132) constituting the non-magnetic part of the retaining piece, **in that** the said extensions (13100) are carried by a ferromagnetic end cap (131) that has the same shape as the laminations, the said cap being interposed between the stack of laminations and the flange (132) the cap and the flange together forming the retaining piece (13).

5. Machine according to Claim 4, **characterized in that** the flange (132) is thicker than the cap (131).

6. Machine according to any one of Claims 1 to 3, **characterized in that** the retaining piece (13) is a single piece which comprises a flange (13220) that constitutes the non-magnetic part of the retaining piece and **in that** the said extensions (13111) belong to the external periphery of the flange (13220).

7. Machine according to any one of the preceding claims, **characterized in that** the retaining piece (13) carries ventilation blades (18, 118, 1118) and **in that** the blades project out from the retaining piece.

8. Machine according to the preceding claim, **characterized in that** the blades (118) are made as one piece with the retaining piece.

9. Machine according to any one of Claims 4 to 6, **characterized in that** the blades are attached to the retaining piece.

10. Machine according to the preceding claim, **characterized in that** the surface of the retaining piece has bosses to hold the blades.

11. Machine according to any one of the preceding claims, **characterized in that** the retaining piece (13) comprises a flange (132, 13220) which constitutes the non-magnetic part of the retaining piece, and **in that** it is provided on the surface of the flange with grooves (1325) to accept a wire (140) of the excitation windings as the said wire passes on from one winding to another.

12. Machine according to any one of the preceding claims, **characterized in that** the stack of laminations and the retaining piece (13) comprise passages (1314, 1324) for securing through-bolts (17).

## Patentansprüche

1. Drehende elektrische Maschine, insbesondere Drehstromgenerator oder Starter-Generator für Kraftfahrzeuge, die einen Stator, der einen mit einem Blechpaket (11) versehenen Rotor (10) umgibt, einen Magnetspalt zwischen dem Stator und dem Rotor, in den Rotor integrierte Dauermagnete (15, 16) und in den Rotor integrierte Anregungsspulen (14) aufweist, wobei die Anregungsspulen um vorstehende Pole (1310) gewickelt sind, die aus dem Blechpaket des Rotors ausgeschnitten sind, und die Dauermagnete in Aufnahmen (13110, 1160) untergebracht sind, die in dem Blechpaket des Rotors hergestellt sind, **dadurch gekennzeichnet, dass** die Aufnahmen (13110) axial an jedem ihrer Enden von einem mit einem unmagnetischen Bereich (132, 13220) versehenen Haltebauteil (13) verschlossen werden, das dazu bestimmt ist, mit den Magneten in Anschlag zu kommen, dass das Haltebauteil (13) Aussparungen (1323) zur Aufnahme der Schaltenden der Anregungsspulen besitzt, und dass das Haltebauteil (13) an seinem Außenumfang axiale Verlängerungen (13100, 13111) besitzt, die in Gegenrichtung bezüglich des Blechpakets (11) des Rotors gerichtet und ausgebildet sind, um die Anregungsspulen (14) gegen die Wirkung der Zentrifugalkraft zu halten.

2. Maschine nach Anspruch 1, **dadurch gekennzeichnet, dass** der Endbereich der Verlängerungen in Richtung der Drehachse der Maschine geneigt ist.

3. Maschine nach Anspruch 2, **dadurch gekennzeichnet, dass** die Verlängerungen (13100, 13111) eine zugespitzte, z.B. eine Trapezform haben.

4. Maschine nach einem der vorhergehenden Ansprüche, **dadurch gekennzeichnet, dass** das Haltebauteil (13) einen Flansch (132) aufweist, der den unmagnetischen Bereich des Haltebauteils bildet, dass die Verlängerungen (13100) von einer ferromagnetischen Endkappe (131) getragen werden, die die gleiche Form hat wie die Bleche, wobei die Kappe zwischen das Blechpaket und den Flansch (132) eingefügt ist, wobei die Kappe und der Flansch das Haltebauteil (13) bilden.

5. Maschine nach Anspruch 4, **dadurch gekennzeichnet, dass** der Flansch (132) dicker ist als die Kappe (131).

6. Maschine nach einem der Ansprüche 1 bis 3, **dadurch gekennzeichnet, dass** das Haltebauteil (13) ein einziges Bauteil ist, das einen Flansch (13220) aufweist, der den unmagnetischen Bereich des Haltebauteils bildet, und dass die Verlängerungen (13111) zum Außenumfang des Flanschs (13220) gehören.

7. Maschine nach einem der vorhergehenden Ansprüche, **dadurch gekennzeichnet, dass** das Haltebauteil (13) Lüftungsschaufeln (18, 118, 1118) trägt, und dass die Schaufeln sich ausgehend vom Haltebauteil vorstehend erstrecken.

8. Maschine nach dem vorhergehenden Anspruch, **dadurch gekennzeichnet, dass** die Schaufeln (118) aus einem Stück mit dem Haltebauteil bestehen.

9. Maschine nach einem der Ansprüche 4 bis 6, **dadurch gekennzeichnet, dass** die Schaufeln auf das Haltebauteil aufgesetzt sind.

10. Maschine nach dem vorhergehenden Anspruch, **dadurch gekennzeichnet, dass** die Fläche des Haltebauteils Wölbungen aufweist, um die Schaufeln zu halten.

11. Maschine nach einem der vorhergehenden Ansprüche, **dadurch gekennzeichnet, dass** das Haltebauteil (13) einen Flansch (132, 13220) aufweist, der den unmagnetischen Bereich des Haltebauteils bildet, und dass auf der Fläche des Flanschs Rillen (1325) vorgesehen sind, um einen Draht (140) der Anregungsspulen beim Übergang des Drahts von einer Spule zur anderen aufzunehmen.

12. Maschine nach einem der vorhergehenden Ansprüche, **dadurch gekennzeichnet, dass** das Blechpaket und das Haltebauteil (13) Durchlässe (1314, 1324) für Befestigungszugstangen (17) aufweisen.
